(19) Europäisches Patentamt / European Patent Office / Office européen des brevets

(11) **EP 4 129 938 A1**

(12) **EUROPEAN PATENT APPLICATION**
published in accordance with Art. 153(4) EPC

(43) Date of publication:
**08.02.2023 Bulletin 2023/06**

(21) Application number: **21774146.1**

(22) Date of filing: **29.03.2021**

(51) International Patent Classification (IPC):
**C03B 27/012** (1990.01)     **C03C 27/12** (1968.09)
**B60J 1/00** (1968.09)

(52) Cooperative Patent Classification (CPC):
**B32B 17/00; B60J 1/00; C03B 27/012**

(86) International application number:
**PCT/JP2021/013429**

(87) International publication number:
**WO 2021/193979 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.03.2020 JP 2020059215**

(71) Applicant: **NIPPON SHEET GLASS COMPANY,
LIMITED
Tokyo 108-6321 (JP)**

(72) Inventors:
• **SHIMOMURA, Takahiro**
  **Tokyo 108-6321 (JP)**
• **ANDO, Kenshu**
  **Tokyo 108-6321 (JP)**
• **HOTTA, Hirofumi**
  **Tokyo 108-6321 (JP)**

(74) Representative: **Mewburn Ellis LLP
Aurora Building
Counterslip
Bristol BS1 6BX (GB)**

(54) **WINDSHIELD**

(57) A windshield according to the present invention includes an outer glass plate, an inner glass plate that faces the outer glass plate, and an intermediate film disposed between the outer glass plate and the inner glass plate, and in at least a partial region of the outer glass plate and the inner glass plate, compressive principal stress on a surface on a vehicle exterior side of the outer glass plate is larger than compressive principal stress on a surface on a vehicle interior side of the inner glass plate.

Fig. 3

**Description**

Technical Field

The present invention relates to a windshield and a manufacturing method thereof.

Background Art

Laminated glass for automobiles that is used for a windshield and the like is constituted by an outer glass plate, an inner glass plate, and an intermediate film disposed between the glass plates (e.g., Patent Literature 1).

Citation List

Patent Literature

Patent Literature 1: JP 2016-64965A

Summary of Invention

Technical Problem

Incidentally, regarding conventional laminated glass, approaches of increasing compression stress on the surface of laminated glass so as to make the laminated glass less likely to break have been taken to improve durability against collision. However, for example, in an accident involving a collision where a person collides with a windshield from outside the vehicle, if the windshield does not break, there is a risk that the person who collided with the vehicle will be subjected to a major impact from the windshield.

The present invention was made in order to resolve the foregoing issue, and it is an object thereof to provide a windshield that is likely to break when a person collides with the windshield from outside the vehicle, and a manufacturing method thereof.

Solution to Problem

Item 1. A windshield including:

an outer glass plate;
an inner glass plate that faces the outer glass plate; and
an intermediate film disposed between the outer glass plate and the inner glass plate,
in which, in at least partial region of the outer glass plate and the inner glass plate, compressive principal stress on a surface on a vehicle exterior side of the outer glass plate is higher than compressive principal stress on a surface on a vehicle interior side of the inner glass plate.

Item 2. The windshield according to Item 1,
in which the at least partial region is a region below a center in an up-down direction of the outer glass plate and the inner glass plate.

Item 3. The windshield according Item 1 or 2,
in which, in the at least partial region, the compressive principal stress on the surface on the vehicle exterior side of the outer glass plate is higher than compressive principal stress on a surface on a vehicle interior side of the outer glass plate.

Item 4. The windshield according to any one of Items 1 to 3,
in which, in the at least partial region, compressive principal stress on a surface on the vehicle exterior side of the inner glass plate is lower than the compressive principal stress on the surface on the vehicle interior side of the inner glass plate.

Item 5. The windshield according to any one of Items 1 to 3,
in which, in the at least partial region, the compressive principal stress on the surface on the vehicle exterior side of the inner glass plate is higher than the compressive principal stress on the surface on the vehicle interior side of the inner glass plate.

Item 6. The windshield according to any one of Items 1 to 5,
in which a thickness of the outer glass plate is larger than a thickness of the inner glass plate.

Item 7. The windshield according to any one of Items 1 to 6,

in which the thickness of the outer glass plate is larger than or equal to 0.7 mm and smaller than or equal to 5.0 mm, and the thickness of the inner glass plate is larger than or equal to 0.3 mm and smaller than or equal to 3.0 mm.

Item 8. The windshield according to any one of Items 1 to 7,

in which, in the at least partial region, the compressive principal stress on the surface on the vehicle exterior side of the outer glass plate is larger than or equal to 5 MPa and smaller than or equal to 50 MPa.

Item 9. The windshield according to Item 8,

in which, when the thickness of the outer glass plate is indicated by t1, the thickness of the inner glass plate is indicated by t2, the compressive principal stress on the surface on the vehicle interior side of the outer glass plate is indicated by S2, and the compressive principal stress on the surface on the vehicle interior side of the inner glass plate is indicated by S4,

a relational expression of $S2*S4*(t1^2+t1*t2)^2<1600$ is satisfied.

Item 10. A manufacturing method of a windshield, including:

producing an outer glass plate through a pressing process,
producing an inner glass plate through a self-weight process, and
disposing an intermediate film between the outer glass plate and the inner glass plate, and fixing the outer glass plate and the inner glass plate to each other via the intermediate film.

Item 11. A manufacturing method of a windshield, including:

producing an outer glass plate through a pressing process, and rapidly cooling the pressed outer glass plate,
producing an outer glass plate through a pressing process,
producing an inner glass plate through a pressing process, and
disposing an intermediate film between the outer glass plate and the inner glass plate, and fixing the outer glass plate and the inner glass plate to each other via the intermediate film.

Advantageous Effects of Invention

According to the present invention, it is possible to provide a windshield that is unlikely to break when a flying rock or the like collides with the windshield from outside the vehicle, and is, on the other hand, likely to break when a person collides with the windshield from outside the vehicle.

Brief Description of Drawings

FIG. 1 is a plan view showing an embodiment of a windshield according to the present invention.
FIG. 2 is a cross-sectional view taken along the line A-A in FIG. 1.
FIG. 3 is a graph showing stress distribution in the thickness direction of the windshield in FIG. 1.
FIG. 4 is a graph showing a result of a drop test.
FIG. 5 is a graph showing another example of stress distribution in the thickness direction of the windshield according to the present invention.
FIG. 6 is a graph showing another example of stress distribution in the thickness direction of the windshield according to the present invention.
FIG. 7 is a graph showing another example of stress distribution in the thickness direction of the windshield according to the present invention.

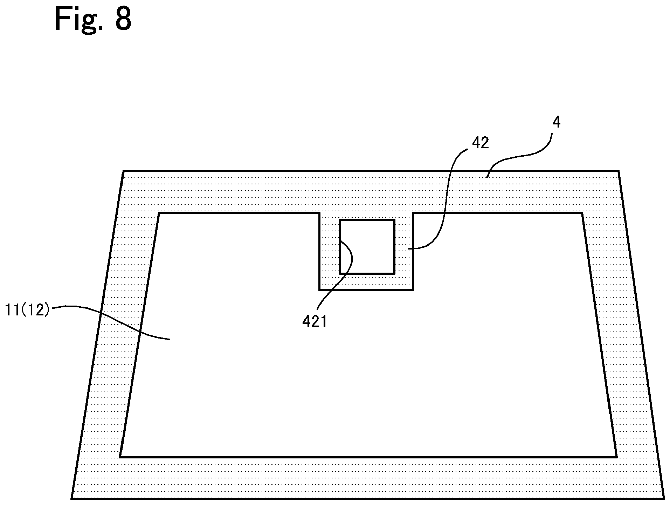

FIG. 8 is a plan view showing another example of the windshield according to the present invention.

Description of Embodiments

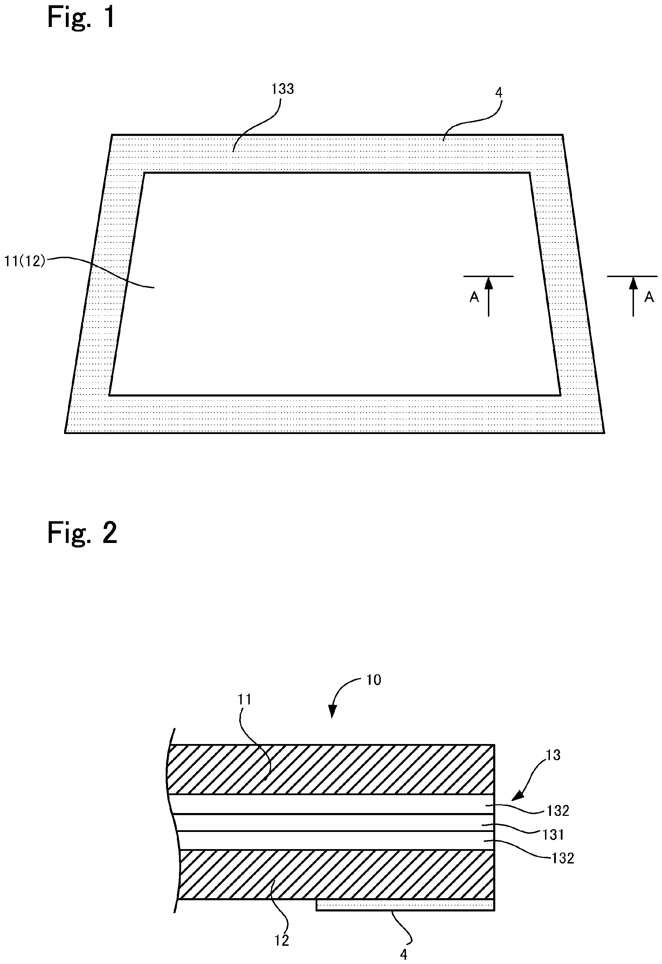

First, a configuration of a windshield according to an embodiment will be described with reference to FIGS. 1 and 2. FIG. 1 is a plan view of the windshield according to this embodiment, and FIG. 2 is a cross-sectional view taken along the line A-A in FIG. 1. Note that the up-down direction in FIG. 1 is referred to as "upper and lower", "perpendicular", or "vertical", and the left-right direction in FIG. 1 is referred to as "horizontal", for convenience of description.
As shown in FIG. 1, this windshield is provided with a trapezoidal laminated glass 10 elongated in the horizontal direction and a blocking layer 4 that is layered on the laminated glass 10. The laminated glass 10 includes an outer glass plate 11, an inner glass plate 12, and an intermediate film 13 disposed therebetween. Constituent elements will be described below in detail.

1. Glass plates

First, the outer glass plate 11 and the inner glass plate 12 will be described. Known glass plates can be used as the outer glass plate 11 and the inner glass plate 12, and these glass plates can also be made of heat-ray absorbing glass, regular clear glass or green glass, or UV green glass. However, the glass plates 11 and 12 are required to attain a visible light transmittance that conforms to the safety standards of a country in which the automobile is to be used. An adjustment can be made so that the outer glass plate 11 ensures a required solar absorptance and the inner glass plate 12 provides a visible light transmittance that meets the safety standards, for example. An example of clear glass, an example of heat-ray absorbing glass, and an example of soda-lime based glass are shown below.

Clear glass

SiOs: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R represents an alkali metal)
Total iron oxide (T-$Fe_2O_3$) in terms of $Fe_2O_3$: 0.08 to 0.14 mass%

Heat-ray absorbing glass

With regard to the composition of heat-ray absorbing glass, a composition obtained based on the composition of clear glass by setting the ratio of the total iron oxide (T-$Fe_2O_3$) in terms of $Fe_2O_3$ to 0.4 to 1.3 mass%, the ratio of CeOs to 0 to 2 mass%, and the ratio of TiOs to 0 to 0.5 mass%, and reducing the components (mainly SiOs and $Al_2O_3$) forming the framework of glass by an amount corresponding to the increases in T-$Fe_2O_3$, CeOs, and $TiO_2$ can be used, for example.

Soda-lime based glass

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO+CaO: 5 to 15 mass%
$Na_2O+K_2O$: 10 to 20 mass%
$SO_3$: 0.05 to 0.3 mass%
$B_2O_3$: 0 to 5 mass%
Total iron oxide (T-$Fe_2O_3$) in terms of $Fe_2O_3$: 0.02 to 0.03 mass%

Although there is no particular limitation on the thickness of the laminated glass 10 according to this embodiment, it is possible to set the total thickness of the outer glass plate 11 and the inner glass plate 12 to 2.1 to 6 mm, for example, and, from the viewpoint of weight reduction, the total thickness of the outer glass plate 11 and the inner glass plate 12 is preferably set to 2.4 to 3.8 mm, more preferably 2.6 to 3.4 mm, and particularly preferably 2.7 to 3.2 mm.

The outer glass plate 11 is mainly required to have durability and impact resistance against external hazards. When this outer glass plate is used for a windshield of an automobile, impact-resistance against flying objects such as small stones is required. On the other hand, increasing the thickness increases the weight, which is not preferable. From this viewpoint, the thickness of the outer glass plate 11 is preferably 0.7 to 5.0 mm, more preferably 1.5 to 3.0 mm, and particularly preferably 1.8 to 2.3 mm.

Although the thickness of the inner glass plate 12 can be made equal to that of the outer glass plate 11, the thickness of the inner glass plate 12 can be made larger or smaller than that of the outer glass plate 11 in order to reduce the weight of the laminated glass 10, for example. Specifically, when glass strength is taken into consideration, the thickness is preferably 0.3 to 3.0 mm, more preferably 0.7 to 2.3 mm, and particularly preferably 1.4 to 2.0 mm.

In addition, the laminated glass 10 is curved so as to protrude to the vehicle exterior side, and the thickness thereof in this case is measured at two positions: an upper position and a lower position on a center line extending vertically through the center of the laminated glass 10 in the horizontal direction. Although there is no particular limitation on the measuring apparatus, a thickness gauge such as SM-112 manufactured by TECLOCK Corporation can be used, for example. During measurement, the laminated glass 10 is disposed such that the curved surface thereof is placed on a flat surface, and an end portion of the laminated glass 1 is sandwiched by and measured using the thickness gauge.

Note that the outer glass plate 11 and the inner glass plate 12 can be strengthened, and, for example, at least one of the glass plates can be strengthened using air-cooling. Moreover, it is also possible to chemically strengthen both of the glass plates.

2. Intermediate film

The intermediate film 13 is formed of a plurality of layers, and, for example, as shown in FIG. 2, the intermediate film 13 can be constituted by three layers, namely a soft core layer 131 and outer layers 132 that are harder than the core layer 131 and sandwich the core layer 131. Note that there is no limitation to this configuration, and it is sufficient that the intermediate film 13 is formed of a plurality of layers including the soft core layer 131. The intermediate film 13 can also be constituted by two layers that include the core layer 131 (one core layer and one outer layer), an odd number of five or more layers disposed centered on the core layer 131 (one core layer and four outer layers), or an even number of layers that include the core layer 131 disposed on the inner side (one core layer and other outer layers), for example. Alternatively, the intermediate film 13 can also be constituted by one layer.

The core layer 131 can be formed of a material softer than that of the outer layers 132, but there is no limitation thereto. In addition, the materials of the layers 131 and 132 are not particularly limited, but, for example, the layers 131 and 132 can be formed such that the core layer is softer than the layers 131 and 132. The outer layers 132 can be made of a polyvinyl butyral resin (PVB), for example. Polyvinyl butyral resin has excellent adhesiveness to the glass plates and penetration resistance and is thus preferable . On the other hand, the core layer 131 can be made of an ethylene vinyl acetate resin (EVA) or a polyvinyl acetal resin, which is softer than the polyvinyl butyral resin forming the outer layers 132. When the soft core layer 131 is sandwiched between the outer layers, the sound insulation performance can be significantly improved while keeping adhesiveness and penetration resistance that are equivalent to those of a single-layered resin intermediate film 3.

In addition, a functional film that has various functions can be used for the core layer 131 in accordance with the application. It is possible to use a known heat shield film, heat-generating film, projection film, light-emitting film, antenna film, or the like.

The total thickness of the intermediate film 13 is not particularly specified, and is preferably 0.3 to 6.0 mm, more preferably 0.5 to 4.0 mm, and particularly preferably 0.6 to 2.0 mm. Meanwhile, the thickness of the core layer 131 is preferably 0.1 to 2.0 mm and more preferably 0.1 to 0.6 mm. If the thickness of the core layer 131 is smaller than 0.1 mm, the soft core layer 131 is unlikely to have any affect, and, if the thickness is larger than 2.0 mm or 0.6 mm, the total thickness and the cost of the intermediate film 13 increase. Meanwhile, the thickness of each of the outer layers 132 is not particularly limited, but is preferably 0.1 to 2.0 mm, and more preferably 0.1 to 1.0 mm, for example. Alternatively, it is also possible to fix the total thickness of the intermediate film 13 and adjust the thickness of the core layer 131 without exceeding the fixed total thickness.

Note that the intermediate film 13 is not required to have a constant thickness over the entire surface, and, for example, the intermediate film 13 can also have a wedge shape so as to be suited to a laminated glass that is used for a head-up display. In this case, the thickness of the intermediate film 13 is measured at positions having the smallest thickness, that is, in the lowest side portion of the laminated glass.

Although there is no particular limitation on the method for manufacturing the intermediate film 13, examples thereof include a method in which a resin component, such as the above-described polyvinyl acetal resin, a plasticizer, and other additives, if necessary, are mixed and uniformly kneaded, and then the layers are collectively extruded, and a method in which two or more resin films produced using this method are layered through a pressing process, a lamination process, or the like. Each of the resin films before being layered using the layering method that uses the pressing process, the lamination process, or the like may have a single-layer structure or a multilayer structure.

3. Blocking layer

As shown in FIG. 1, at the peripheral edges of the laminated glass 10, the blocking layer 4 is layered on ceramic of a deep color such as black. This blocking layer 4 blocks the field of view from the vehicle interior or the vehicle exterior, and is formed in a belt-like shape along the four sides of the laminated glass 10.

The blocking layer 4 can take various forms such as being layered only on the surface on the vehicle interior side of the inner glass plate 12, being layered only on the inner surface of the outer glass plate 11, or being layered on the inner surface of the outer glass plate 11 and the inner surface of the inner glass plate 12. In addition, the blocking layer 4 can be formed of ceramic and various materials, but can have the following composition, for example.

Table 1

|  |  | First and second colored ceramic paste |
| --- | --- | --- |
| Pigment*1 | mass% | 10 |
| Resin (cellulosic resin) | mass% | 10 |
| Organic solvent (pine oil) | mass% | 10 |
| Glass binder*2 | mass% | 70 |
| Viscosity | dPs | 150 |
| *1 Main components: copper oxide, chromium oxide, iron oxide, and manganese oxide<br>*2 Main components: bismuth borosilicate and zinc borosilicate | | |

Ceramic can be formed using a screen printing method, but, other than this, ceramic can also be produced by transferring a baking transfer film onto a glass plate and baking it. If screen printing is used, conditions are set as follows: polyester screen: 355 mesh, coating thickness: 20 $\mu$m, tension: 20 Nm, squeegee hardness: 80 degrees, mounting angle: 75°, and printing speed: 300 mm/s, for example, and ceramic can be formed by drying the resulting material in a drying furnace at 150°C for 10 minutes.

Note that the blocking layer 4 can also be formed by attaching a blocking film made of a deep-color resin to the laminated glass 10, in place of layering ceramic on the laminated glass 10.

4. Stress distribution of laminated glass

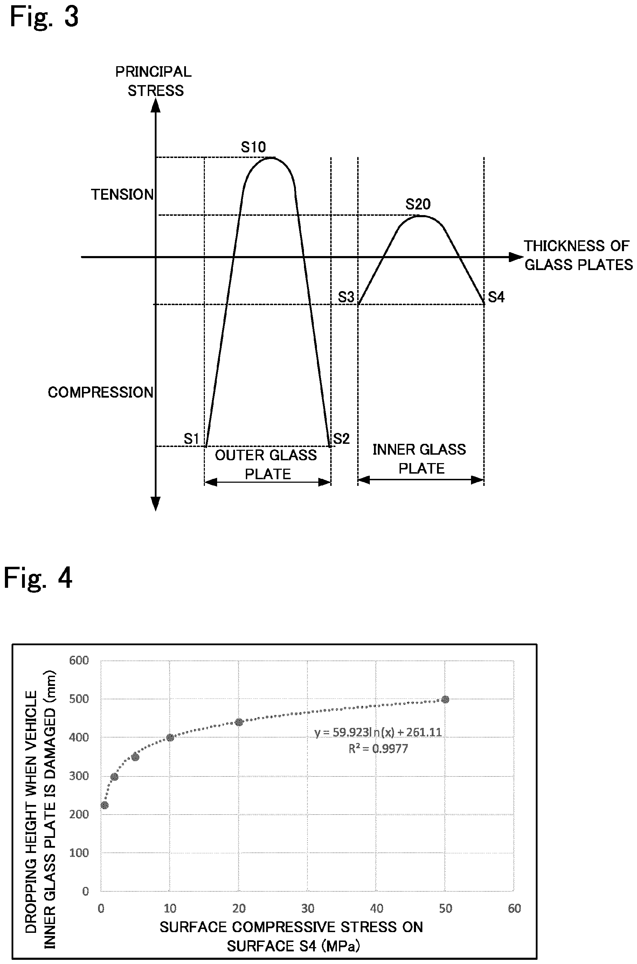

FIG. 3 is a graph showing principal stress distribution of the laminated glass according to this embodiment. The horizontal axis of the graph in FIG. 3 indicates the thickness direction of the laminated glass 10, and the vertical axis indicates stress. Note that compressive stress is expressed as being negative, and tensile stress is expressed as being positive. As shown in FIG. 3, the principal stress on the surface on the vehicle exterior side of the outer glass plate 11 of this laminated glass 10 is represented as compression, and changes to tension toward the inner side in the thickness direction of the outer glass plate 11. The tensile principal stress reaches its peak in the vicinity of the center in the thickness direction, and the principal stress then decreases and changes to compression toward the surface on the vehicle interior side of the outer glass plate 11. The outer glass plate 11 is formed such that the principal stress on the surface on the vehicle interior side thereof represents substantially the same compression as that on the surface on the vehicle exterior side. Hereinafter, for ease of description, the compressive principal stress on the surface on the vehicle exterior side of the outer glass plate 11 is indicated by S1, and the compressive principal stress on the surface on the vehicle interior side thereof is indicated by S2. In the example in FIG. 3, S1 and S2 are substantially the same. Moreover, the peak tensile principal stress is indicated by S10.

The inner glass plate 12 exhibits stress distribution similar to that of the outer glass plate 11. That is to say, the principal stress on the surface on the vehicle exterior side of the inner glass plate 12 represents compression, and changes to tension toward the inner side in the thickness direction of the inner glass plate 12. The tensile principal stress reaches its peak in the vicinity of the center in the thickness direction, and the principal stress then decreases and changes to compression toward the surface on the vehicle interior side of the inner glass plate 12. The inner glass plate 12 is formed such that the principal stress on the surface on the vehicle interior side thereof is represented as substantially the same compression as that on the surface on the vehicle exterior side thereof. Hereinafter, for ease of description, the compressive principal stress on the surface on the vehicle exterior side of the inner glass plate 12 is indicated by S3, and the compressive principal stress on the surface on the vehicle interior side is indicated by S4. In the example in FIG. 3, S3 and S4 are substantially the same. Moreover, the peak tensile principal stress is indicated by S20.

Specifically, the compressive principal stress S1 and the compressive principal stress S2 of the outer glass plate 11 are preferably higher than or equal to 5 MPa and lower than or equal to 50 MPa, and more preferably higher than or equal to 5 MPa and lower than or equal to 40 MPa. If, for example, the principal stress S1 is 5 MPa or higher, it is possible to suppress damage due to a flying rock. On the other hand, if the principal stress S1 is 40 MPa or higher, optical distortion is increased. In addition, the compressive principal stress S3 and the compressive principal stress S4 of the inner glass plate 12 are preferably lower than or equal to 10 MPa, and more preferably lower than or equal to 5 MPa. In particular, if S4 is lower than or equal to 10 MPa, the dropping height of a weight to be described later can be reduced.

Furthermore, the tensile principal stress S10 of the outer glass plate 11 is preferably higher than or equal to 2.5 MPa and lower than or equal to 25 MPa, and more preferably higher than or equal to 2.5 MPa and lower than or equal to 20 MPa. In addition, the tensile principal stress S20 of the inner glass plate 12 is preferably lower than or equal to 5 MPa, and more preferably lower than or equal to 2.5 MPa.

A scattered light polariscope (for example, SCALP-04 of Orihara industrial co., ltd) can be used for measuring principal stress. First, the scattered light polariscope is set at the center of a surface on which measurement is to be performed, and is rotated within the surface, and measurement is performed at three angles (0, 45, and 90 degrees). Rosette analysis is then performed on the measurement results, and the direction and magnitude of principal stress are calculated.

In the laminated glass according to this embodiment, the principal stress S1 is higher than the principal stress S4 (S1>S4). Based on this, the present inventors found that, for example, when an object collides with the outer glass plate 11 from outside the laminated glass, the inner glass plate 12 breaks before the outer glass plate 11 breaks. The present inventors arrived at this finding through the following experiment. First, six types of laminated glass in which the thickness of each of the two glass plates 11 and 12 was 2 mm, the principal stress S1 was S4 + 5 MPa, the principal stress S3 = S4, and the principal stress S4 was different were prepared. Furthermore, a ball-like weight of 1010.2 kg with a radius of about 9511 mm was prepared, and was dropped onto the six types of laminated glass with the outer glass plate 11 directed upward, from a predetermined height. As a result, it was found that, in all types of laminated glass, the inner glass plate 12 broke before the outer glass plate 11 broke. FIG. 4 shows the relation between the principal stress S4 in this test and when the inner glass plate 12 breaks. Based on this result, the smaller the principal stress S4 is, the more likely the inner glass plate 12 is to break.

In addition to the relation of the principal stress S1>S4 as described above, furthermore, the principal stress S2, the principal stress S4, the thickness t1 of the outer glass plate 11, and the thickness t2 of the inner glass plate 12 preferably satisfy Expression (1) below. Hereinafter, the left side in Expression (1) is referred to as an injury criterion.

$$S2*S4*(t1^2+t1*t2)^2 < 1600 \qquad (1)$$

Expression (1) indicates that it is possible to alleviate a head injury when a pedestrian collides with the windshield. Here, an HIC (Head Injury Criterion) introduced by the National Highway Traffic Safety Administration (NHTSA) is used. For this HIC, 1000 is used as a reference value, and it is stipulated that, when a head is subjected to an impact at an HIC of 1000, the probability of the head being severely injured is 50%.

In calculating Expression (1), the following examination was performed. First, the present inventors reached the finding that the HIC of a laminated glass in which the thickness of each of the glass plates 11 and 12 is 2 mm and the principal stress S2 and the principal stress S4 are lower than 5 MPa is lower than or equal to 1000. Furthermore, using a laminated glass that includes glass plates of the above thickness and principal stress, a simulation in which a weight was dropped onto the laminated glass from a predetermined height was performed under conditions similar to that of the above experiment. First, when an approximate curve of the graph shown in FIG. 4 is calculated, the relation between the principal stress S4 and the height of the weight (h1) is expressed by Expression (2) below (correlation coefficient R = 0.9977).

$$h1 = 59.923*S4 + 261.11 \ (2)$$

Based on this Expression (2), when the thickness of the outer glass plate 11 and the thickness of the inner glass plate 12 are respectively indicated by t1 and t2, and are increased to thicknesses other than 2 mm, the relation between the principal stress S4 and the height (h1) of the weight when the inner glass plate 12 breaks is expressed by the relational expression below, in consideration of the relation between occurring stress and the plate thicknesses.

$$h1 = (59.923*S4+261.11)*((t1+t2)/(2+2))^2 \ (3)$$

Next, a dropping height in a case where the inner glass plate 12 breaks first and then outer glass plate 11 breaks was calculated. Since the laminated glass maintains the rigidity thereof using only the outer glass plate 11, only the outer glass plate 11 is taken into consideration, and thus, based on the relation indicated by Expression (2), the relation between the principal stress S2 and the height of the weight (h2) when the outer glass plate 11 breaks is expressed by the follwing expression below.

$$h2 = (59.923 * S2 + 261.11) * (t1/2)^2 \qquad (4)$$

Therefore, the dropping height (h) of the weight when both the inner glass plate 12 and the outer glass plate 11 of the laminated glass break is expressed as h = h1+h2.

In this simulation, the height of the weight when the inner glass plate 12 and the outer glass plate 11 broke was 634 mm. Therefore, if the weight is dropped from a lower height, the HIC is lower than 1000. This is because energy is consumed as a result of the glass breaking, and the impact is smaller since the glass breaks due to the weight being dropped from a lower height.

Regarding damage to the laminated glass, the stress values of S2 and S4 are related to the dropping height, and thus, if S2*S4 < 25 when the thicknesses of both the glass plates 11 and 12 are 2 mm, the dropping height is lower than or equal to 634 mm. In consideration of damage to the laminated glass being caused by a bending fracture, the inner glass plate 12 breaking first, and the relation beween the plate thicknesses and occurring stress, Expression (1) above was determined by increasing the thicknesses of the glass plates 11 and 12 to a thickness other than 2 mm. Therefore, if S2, S4, t1, and t2 are determined such that Expression (1) is satisfied, it is possible to make the HIC 1000 or lower, and to decrease the probability of an injury when a head collides with the windshield.

5. Manufacturing method of windshield

Next, an example of a manufacturing method of a windshield configured as described above will be described. First, the manufacturing method of the laminated glass 1 will be described.

First, the above-described blocking layer 4 is layered on at least one of the outer glass plate 11 and the inner glass plate 12, which have a flat-plate shape. Next, these glass plates 11 and 12 are molded in a curve. The molding method is not particularly limited, and a known method can be used. A glass plate in a flat-plate shape is passed through a heating furnace, and is then pressed by an upper mold and a lower mold, and thereby the glass plate can be molded into a curved shape (a pressing process), for example. Alternatively, a glass plate having a flat-plate shape is placed on a frame-type mold, and the mold is passed through a heating furnace. Accordingly, the glass plate softens, and is molded into a curved shape under its own weight (a self-weight process).

Note that, to acheive stress distribution such as that shown in FIG. 3, it is preferable that the outer glass plate 11 is molded using the pressing process, and the inner glass plate 12 is molded using the self-weight process . Compared with the self-weight process, large compressive and tensile principal stress is achieved by molding a glass plate using the pressing process. Alternatively, it is also possible to mold both the glass plates 11 and 12 using the pressing process . Note that, in this case, while a process of rapidly cooling (quenching) the pressed outer glass plate 11 is performed, the pressed inner glass plate 12 needs to be slowly cooled instead of being rapidly cooled. Pressing and then rapidly cooling the outer glass plate 11 in this manner increases compressive and tensile principal stress.

After the outer glass plate 11 and the inner glass plate 12 are molded into a curved shape in this manner, the intermediate film 13 is sandwiched between the outer glass plate 11 and the inner glass plate 12, and the glass plates 11 and 12 with the intermediate film 13 sandwiched therebetween are placed into a rubber bag, and are subjected to preliminary bonding at about 70 to 110°C while being decompressed and suctioned. Preliminary bonding can be carried out using a method other than this method. The intermediate film 13 is sandwiched between the outer glass plate 11 and the inner glass plate 12, which are then heated in an oven at 45 to 65°C, for example. Subsequently, this laminated glass is pressed by a roll at 0.45 to 0.55 MPa. Next, this laminated glass is heated in an oven again at 80 to 105°C, and is then pressed again by a roll at 0.45 to 0.55 MPa. Preliminary bonding is completed in this manner.

Then, permanent bonding is performed. The preliminarily bonded laminated glass is permanently bonded using an autoclave at a pressure of 8 to 15 atm and at 100 to 150°C, for example. Specifically, permanent bonding can be performed under the conditions of 14 atm of pressure and a temperature of 145°C, for example. In this manner, the laminated glass 1 according to this embodiment is manufactured.

6. Features

The compressive principal stress S1 on the surface on the vehicle exterior side of the outer glass plate 11 of the above-described windshield is large, and thus, for example, even if an object hits the outer glass plate 11 from outside the vehicle, deformation of the windshield is small. When deformation is small in this manner, the compressive principal stress S1 is large, and thus breaking can be suppressed.

On the other hand, the compressive principal stress S4 on the surface on the vehicle interior side of the inner glass plate 12 is smaller than the principal stress S1, and thus, the laminated glass 10 is likely to break when a person collides with the windshield from outside the vehicle. The weight of a person is large, and thus deformation of the glass plates at the time of collision is large. When a person collides with the windshield from outside the vehicle, both the glass plates 11 and 12 deform similarly, so as to protrude to the vehicle interior side. At this time, tensile stress acts on the surface on the vehicle interior side of the inner glass plate 12 due to deformation, but the compressive principal stress S4 on the surface on the vehicle interior side of the inner glass plate 12 is small, and thus, if the glass plates 11 and 12 deform as described above, the inner glass plate 12 breaks first. Accordingly, the rigidity of the laminated glass 10 decreases, and thus, after this, the outer glass plate 11 also breaks. Therefore, the laminated glass 10 is likely to break when a person collides with the laminated glass 10 from outside the vehicle. Therefore, it is possible to alleviate an impact that the person in the collusion is subjected to from the laminated glass 10.

Particularly, if S2, S4, t1, and t2 are determined such that Expression (1) above is satisfied, it is possible to reduce the probability of an injury when a head collides with the windshields.

7. Modified Examples

Although the embodiment of the present invention has been described above, the present invention is not limited to the above embodiment, and various modifications can be carried out without departing from the gist of the invention. Note that the following modified examples can be combined as appropriate.

7-1

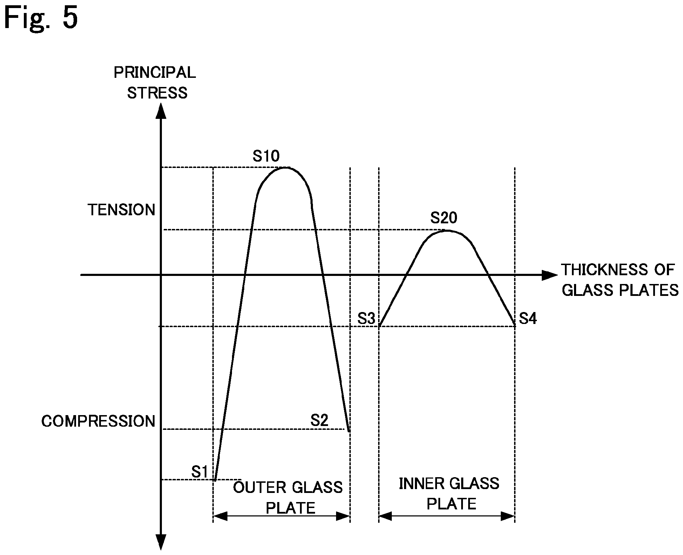

In the above embodiment, the principal stress S1 and the principal stress S2 of the outer glass plate 11 are nearly the same, but, for example, as shown in FIG. 5, it is also possible to make S1 larger than S2. Accordingly, the principal stress S2 on the surface on the vehicle interior side is smaller, and thus, when the inner glass plate 12 breaks, the outer glass plate 11 is likely to break thereafter. Specifically, for example, S2 can be made smaller than S1 by 10 MPa. Note that, to provide such a difference between the principal stress S1 and the principal stress S2, for example, it suffices for the surface on the vehicle exterior side of the outer glass plate 11 to be more intensely cooled than the surface on the vehicle interior side thereof, after being pressed.

7-2

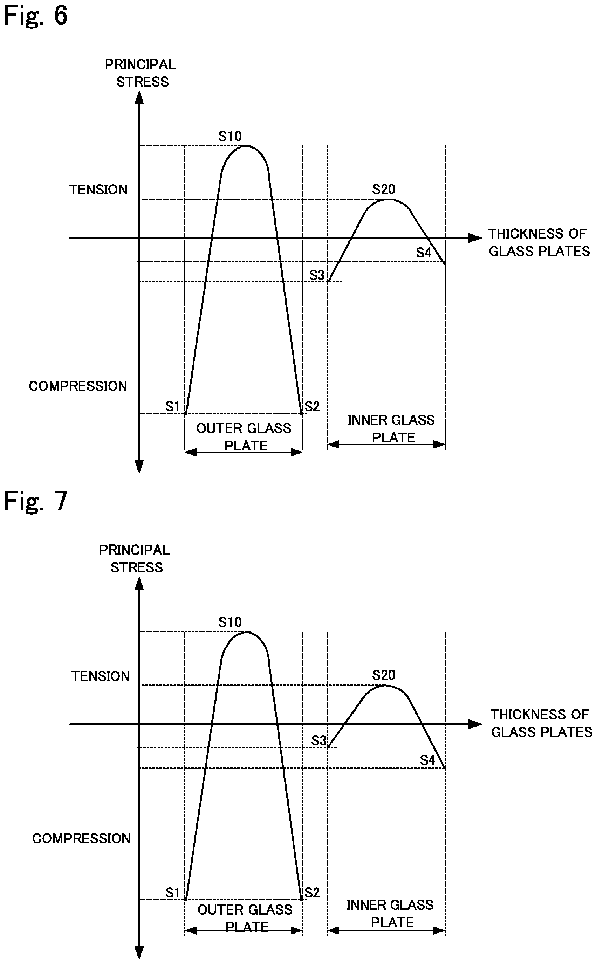

In the above embodiment, the principal stress S3 and the principal stress S4 of the inner glass plate 12 are nearly the same, but, for example, as shown in FIG. 6, it is also possible to make S4 smaller than S3. Accordingly, the compressive principal stress S4 on the surface on the vehicle interior side is smaller, and thus, the inner glass plate 12 is more likely to break when tensile stress acts on the surface on the vehicle exterior side due to a person colliding with the windshield from outside the vehicle. Specifically, for example, S4 can be made smaller than S3 by 10 MPa. Note that, to provide such a difference between the principal stress S3 and the principal stress S4, for example, it suffices for the surface on the vehicle exterior side of the inner glass plate 12 to be more intensely cooled than the surface on the vehicle interior side thereof, after being pressed.

Alternatively, as shown in FIG. 7, it is also possible to make S4 larger than S3. Accordingly, the compressive principal stress S3 on the surface on the vehicle exterior side is smaller, and thus, for example, when a person collides with the windshield from inside the vehicle, tensile stress caused by deformation acts on the surface on the vehicle exterior side of the inner glass plate 12, making the inner glass plate 12 more likely to break. Specifically, for example, S3 can be made smaller than S4 by 3 MPa. Note that, to provide such a difference between the principal stress S3 and the principal stress S4, for example, it suffices for the surface on the vehicle interior side of the inner glass plate 12 to be cooled at a temperature lower than that for the surface on the vehicle exterior side thereof, in the self-weight process.

7-3

Distribution of principal stress such as that described above does not need to be provided over the entire laminated glass, and may be formed in a portion thereof. When such distribution is formed in a portion of the laminated glass, such distribution is preferably formed at least below the center in the up-down direction of the laminated glass, for example. This is because, when a person collides with the windshield from outside the vehicle, the person is more likely to collide with a lower portion of the windshield.

7-4

The configuration of the blocking layer 4 is not particularly limited, and the blocking layer 4 can be disposed along the peripheral edges of the glass plates as described above, and can also be provided with an extension portion 42 for an in-vehicle camera as shown in FIG. 7. A camera shooting window 421 is formed in this extension portion 42, making it possible to capture an image of the surroundings of the vehicle. In addition, a bracket that supports the camera can be hidden from outside the vehicle, using this extension portion 42. The blocking layer 4 according to the present invention can be provided with such an extension portion, or can also have various shapes. Note that the blocking layer 4 is not necessary, and does not necessarily need to be provided.

Examples

Hereinafter, examples of the present invention will be described. However, the present invention is not limited to the following examples.

1. Examples and comparative examples

Windshields according to Examples 1 to 11 and Comparative examples 1 and 2 were produced according to the simulation. The principal stress S1 to S4 shown in Table 2 below is the same as that described in the above embodiment. In Examples 1 to 11, S1 is larger than S4, but, in Comparative examples 1 and 2, S1 and S4 are the same.

Table 2

|  | Thickness (mm) |  | Principal stress (MPa) |  |  |  |
|---|---|---|---|---|---|---|
|  | Outer glass plate | Inner glass plate | S1 | S2 | S3 | S4 |
| Ex. 1 | 2 | 2 | 5 | 5 | 2 | 2 |
| Ex. 2 | 2 | 2 | 5 | 5 | 4 | 2 |
| Ex. 3 | 2 | 2 | 30 | 30 | 0.5 | 0.5 |
| Ex. 4 | 2 | 2 | 10 | 10 | 2 | 2 |
| Ex. 5 | 2 | 2 | 5 | 4 | 2 | 2 |
| Ex. 6 | 2 | 1.8 | 5 | 5 | 4 | 4 |
| Ex. 7 | 2 | 2 | 5 | 5 | 4 | 4 |
| Ex. 8 | 2 | 2 | 5 | 5 | 2 | 4 |
| Ex. 9 | 2 | 2 | 5 | 4 | 4 | 4 |
| Ex. 10 | 2 | 2 | 10 | 2 | 2 | 10 |
| Ex. 11 | 2 | 2 | 4 | 4 | 2 | 2 |
| Comp. Ex. 1 | 2 | 2 | 5 | 5 | 5 | 5 |
| Comp. Ex. 2 | 2 | 2 | 10 | 10 | 10 | 10 |

2. Dropping ball test

Next, a dropping ball test was conducted according to the simulation. In this test, a ball-like weight of 1010.2 kg with a radius of about 9511 mm was envisioned as a head, and was dropped onto the windshields according to the above examples and comparative examples, and heights when the glass plates broke (hereinafter, referred to as "weight heights") were calculated. Therefore, it is conceivable that the lower the weight height is, the more likely the windshield is to break due to an impact from an object that is about the same size as the head of a human, which is similar to the weight used. In addition, two types of tests where the weight was dropped from outside the vehicle (from the outer glass plate side) and where the weight was dropped from inside the vehicle (from the inner glass plate side) were conducted. At this time, the results were as follows.

Table 3

|  | Weight dropped from outside vehicle |  | Weight dropped from inside vehicle |  | Determination |
|---|---|---|---|---|---|
|  | Breaking of inner glass plate | Breaking of both glass plates | Breaking of outer glass plate | Breaking of both glass plates |  |
|  | (mm) | (mm) | (mm) | (mm) |  |
| Ex. 1 | 303 | 580 | 358 | 580 | A |
| Ex. 2 | 303 | 580 | 358 | 621 | A |
| Ex. 3 | 220 | 604 | 465 | 604 | A |

(continued)

| | Weight dropped from outside vehicle | | Weight dropped from inside vehicle | | Determination |
|---|---|---|---|---|---|
| | Breaking of inner glass plate | Breaking of both glass plates | Breaking of outer glass plate | Breaking of both glass plates | |
| | (mm) | (mm) | (mm) | (mm) | |
| Ex. 4 | 303 | 621 | 399 | 621 | A |
| Ex. 5 | 303 | 566 | 358 | 580 | A |
| Ex. 6 | 311 | 588 | 323 | 536 | A |
| Ex. 7 | 344 | 621 | 358 | 621 | A |
| Ex. 8 | 344 | 621 | 358 | 580 | A |
| Ex. 9 | 344 | 608 | 358 | 621 | A |
| Ex. 10 | 399 | 621 | 399 | 621 | A |
| Ex. 11 | 303 | 566 | 344 | 566 | A |
| Comp. Ex. 1 | 358 | 634 | 358 | 634 | B |
| Comp. Ex.2 | 399 | 718 | 399 | 718 | B |

Determination in Table 3 is performed as follows.

A: Both glass plates break when the height of the weight is lower than 634 mm.
B: Both glass plates break when the height of the weight is weight is 634 mm or higher.
Note that, as described above, 634 mm is a height at which the HIC is nearly 1000.

In Examples 1 to 11, the weight height at which both glass plates broke due to the weight being dropped from outside the vehicle is lower. This is because, as described above, the principal stress S1 is larger than the principal stress S4, and thus, it is conceivable that, if the weight is dropped from outside the vehicle, the inner glass plate breaks first, and then the outer glass plate breaks. Moreover, in Examples 1 to 11, the height of the weight when both the glass plates break is lower than 634 mm, and thus it is conceivable that the HIC is lower than 1000.

When comparing Examples 7 and 9 with each other, S2 is smaller than S1 in Example 9 as shown in FIG. 5. Therefore, the weight height when the weight is dropped from outside the vehicle in Example 9 is lower than the weight height in Example 7.

When comparing Examples 2 and 7, S4 is smaller than S3 in Example 2 as shown in FIG. 6. Therefore, the weight height when the weight is dropped from outside the vehicle in Example 2 is lower than the weight height in Example 7.

When comparing Examples 8 and 7, S3 is smaller than S4 in Example 8 as shown in FIG. 6. Therefore, the weight height when the weight is dropped from outside the vehicle in Example 8 is lower than the weight height in Example 7.

Next, the injury criteria in Expression (1) is calculated as follows. In all of Examples 1 to 11, the injury criterion lower than those of Comparative examples 1 and 2 are shown. Particularly in Examples 1, 2, 5, and 11, it is conceivable that, even if a heal collides with the windshield, the probability of an injury is low.

Table 4

| | |
|---|---|
| Ex. 1 | 640 |
| Ex. 2 | 640 |
| Ex. 3 | 960 |
| Ex. 4 | 1280 |
| Ex. 5 | 512 |

(continued)

| | |
|---|---|
| Ex. 6 | 1155 |
| Ex. 7 | 1280 |
| Ex. 8 | 1280 |
| Ex. 9 | 1024 |
| Ex. 10 | 1280 |
| Ex. 11 | 512 |
| Comp. Ex.1 | 1600 |
| Comp. Ex.2 | 6400 |

3. Flying rock impact test

The following experiment was conducted. First, a flying rock ejection apparatus was disposed 1 m away from each of the windshields according to the above examples and comparative examples. Next, a rock of a weight of 2.0±0.2 mm was ejected to each of the windshields according to the examples and comparative examples at 64 km/h (40 MPh). In one test, five rocks were ejected to different positions in the same area, to check whether or not a cone crack would occur. Similar tests were then conducted in 15 areas, and whether or not a cone crack would occur was checked in a similar fashion. Lastly, an incidence was calculated based on the presence or absence of a cone crack at all of the positions.

Determination in Table 5 below was performed as follows.

A: Incidence is smaller than 1%
B: Incidence is greater than 1% and smaller than or equal to 2%

Table 5

| | |
|---|---|
| Ex. 1 | A |
| Ex. 2 | A |
| Ex. 3 | A |
| Ex. 4 | A |
| Ex. 5 | A |
| Ex. 6 | A |
| Ex. 7 | A |
| Ex. 8 | A |
| Ex. 9 | A |
| Ex. 10 | A |
| Ex. 11 | B |
| Comp. Ex. 1 | A |
| Comp. Ex. 2 | A |

It is conceivable that, based on the above results, breaking due to a flying rock depends on S1. Particularly, in Examples 1 to 11, favorable results were obtained from the above-described dropping ball test and flying rock impact test.

List of Reference Numerals

10    Laminated glass
11    Outer glass plate
12    Inner glass plate
13    Intermediate film
4     Blocking layer


**Claims**

1. A windshield comprising:

    an outer glass plate;
    an inner glass plate that faces the outer glass plate; and
    an intermediate film disposed between the outer glass plate and the inner glass plate,
    wherein, in at least a partial region of the outer glass plate and the inner glass plate, compressive principal stress on a surface on a vehicle exterior side of the outer glass plate is higher than compressive principal stress on a surface on a vehicle interior side of the inner glass plate.

2. The windshield according to claim 1,
    wherein the at least partial region is a region below a center in an up-down direction of the outer glass plate and the inner glass plate.

3. The windshield according to claim 1 or 2,
    wherein, in the at least partial region, the compressive principal stress on the surface on the vehicle exterior side of the outer glass plate is higher than compressive principal stress on a surface on a vehicle interior side of the outer glass plate.

4. The windshield according to any one of claims 1 to 3,
    wherein, in the at least partial region, compressive principal stress on a surface on the vehicle exterior side of the inner glass plate is lower than the compressive principal stress on the surface on the vehicle interior side of the inner glass plate.

5. The windshield according to any one of claims 1 to 3,
    wherein, in the at least partial region, the compressive principal stress on the surface on the vehicle exterior side of the inner glass plate is higher than the compressive principal stress on the surface on the vehicle interior side of the inner glass plate.

6. The windshield according to any one of claims 1 to 5,
    wherein a thickness of the outer glass plate is larger than a thickness of the inner glass plate.

7. The windshield according to any one of claims 1 to 6,

    wherein the thickness of the outer glass plate is larger than or equal to 0.7 mm and smaller than or equal to 5.0 mm, and
    the thickness of the inner glass plate is larger than or equal to 0.3 mm and smaller than or equal to 3.0 mm.

8. The windshield according to any one of claims 1 to 7,
    wherein, in the at least partial region, the compressive principal stress on the surface on the vehicle exterior side of the outer glass plate is larger than or equal to 5 MPa and smaller than or equal to 50 MPa.

9. The windshield according to claim 8,

    wherein, when the thickness of the outer glass plate is indicated by t1, the thickness of the inner glass plate is indicated by t2, the compressive principal stress on the surface on the vehicle interior side of the outer glass plate is indicated by S2, and the compressive principal stress on the surface on the vehicle interior side of the inner glass plate is indicated by S4,
    a relational expression of $S2*S4*(t1^2+t1*t2)^2<1600$ is satisfied.

**10.** A manufacturing method of a windshield, comprising:

producing an outer glass plate through a pressing process,
producing an inner glass plate through a self-weight process, and
disposing an intermediate film between the outer glass plate and the inner glass plate, and fixing the outer glass plate and the inner glass plate to each other via the intermediate film.

**11.** A manufacturing method of a windshield, comprising:

producing an outer glass plate through a pressing process, and rapidly cooling the pressed outer glass plate,
producing an outer glass plate through a pressing process,
producing an inner glass plate through a pressing process, and
disposing an intermediate film between the outer glass plate and the inner glass plate, and fixing the outer glass plate and the inner glass plate to each other via the intermediate film.

# Fig. 1

# Fig. 2

Fig. 3

PRINCIPAL
STRESS

TENSION

COMPRESSION

S10

S20

THICKNESS OF
GLASS PLATES

S3

S4

S1

S2

OUTER GLASS
PLATE

INNER GLASS
PLATE

Fig. 4

DROPPING HEIGHT WHEN VEHICLE
INNER GLASS PLATE IS DAMAGED (mm)

600

500

400

300

200

100

0

$y = 59.923\ln(x) + 261.11$
$R^2 = 0.9977$

0      10      20      30      40      50      60

SURFACE COMPRESSIVE STRESS ON
SURFACE S4 (MPa)

16

# Fig. 5

Fig. 6

Fig. 7

Fig. 8

**INTERNATIONAL SEARCH REPORT**

| International application No. |
|---|
| PCT/JP2021/013429 |

A. CLASSIFICATION OF SUBJECT MATTER
C03B 27/012(2006.01)i; C03C 27/12(2006.01)i; B60J 1/00(2006.01)i
FI: B60J1/00 J; C03C27/12 Z; C03C27/12 R; C03B27/012

According to International Patent Classification (IPC) or to both national classification and IPC

B. FIELDS SEARCHED

Minimum documentation searched (classification system followed by classification symbols)
C03B27/012; C03C27/12; B60J1/00

Documentation searched other than minimum documentation to the extent that such documents are included in the fields searched
Published examined utility model applications of Japan          1922–1996
Published unexamined utility model applications of Japan        1971–2021
Registered utility model specifications of Japan                1996–2021
Published registered utility model applications of Japan        1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-525193 A (CORNING INCORPORATED) 03 September 2015 (2015-09-03) claims 1, 4, paragraphs [0006]-[0008], [0018]-[0023], [0092], fig. 1-3 | 1-9 |
| Y | paragraphs [0085]-[0086] | 10-11 |
| Y | JP 2019-119631 A (NIPPON SHEET GLASS CO., LTD.) 22 July 2019 (2019-07-22) paragraphs [0069], [0076] | 10-11 |
| Y | JP 11-60294 A (NIPPON SHEET GLASS CO., LTD.) 02 March 1999 (1999-03-02) paragraph [0003] | 10-11 |

☐ Further documents are listed in the continuation of Box C.       ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 June 2021 (02.06.2021) | 15 June 2021 (15.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT
Information on patent family members

| International application No. |
| --- |
| PCT/JP2021/013429 |

| Patent Documents referred in the Report | Publication Date | Patent Family | Publication Date |
| --- | --- | --- | --- |
| JP 2015-525193 A | 03 Sep. 2015 | US 2015/0132538 A1 paragraphs [0006]-[0008], [0026]-[0030], [0092], fig. 1-3<br>US 2019/0047260 A1<br>WO 2013/181505 A1<br>EP 2858820 A<br>EP 3424704 A<br>KR 10-2015-0020631 A<br>CN 104703793 A | |
| JP 2019-119631 A | 22 Jul. 2019 | WO 2019/131800 A1 paragraphs [0069] , [0075] | |
| JP 11-60294 A | 02 Mar. 1999 | US 5928793 A column 1, lines 14-22<br>EP 884289 A1<br>ES 2162370 T | |

Form PCT/ISA/210 (patent family annex) (January 2015)

**EP 4 129 938 A1**

**Patent documents cited in the description**

- JP 2016064965 A